## Europäisches Patentamt

## European Patent Office

## Office européen des brevets

(11) Veröffentlichungsnummer: **0 202 400**
**B1**

(12) # EUROPÄISCHE PATENTSCHRIFT

(45) Veröffentlichungstag der Patentschrift:
**11.05.88**

(51) Int. Cl.⁴: **F 02 D 23/00, F 02 D 19/12**

(21) Anmeldenummer: **86102578.1**

(22) Anmeldetag: **27.02.86**

(54) **Brennkraftmaschine mit Abgasturboaufladung.**

(30) Priorität: **10.05.85 DE 3516986**

(43) Veröffentlichungstag der Anmeldung:
**26.11.86 Patentblatt 86/48**

(45) Bekanntmachung des Hinweises auf die Patenterteilung:
**11.05.88 Patentblatt 88/19**

(84) Benannte Vertragsstaaten:
**FR GB IT**

(56) Entgegenhaltungen:
**GB - A - 2 127 486**
**US - A - 2 556 985**
**US - A - 2 608 051**
**US - A - 3 779 213**

**PATENTS ABSTRACTS OF JAPAN, Band 7, Nr. 217**
**(M-245)[1362], 27. September 1983; & JP - A - 58 110 813**
**(ASUNA MATSUMURA) 01-07-1983**
**PATENTS ABSTRACTS OF JAPAN, Band 7, Nr. 106**
**(M-213)[1251], 10. Mai 1983; & JP - A - 58 28 560**
**(TOYOTA JIDOSHA KOGYO K.K.) 19-02-1983**

(73) Patentinhaber: **AUDI AG, Postfach 220,**
**D-8070 Ingolstadt (DE)**

(72) Erfinder: **Piech, Ferdinand, Dr., Gerolfinger Strasse 128,**
**D-8070 ingolstadt (DE)**

(74) Vertreter: **Le Vrang, Klaus, AUDI AG**
**Postfach 220 Patentabteilung I/EQP, D-8070 Ingolstadt**
**(DE)**

# Beschreibung

Die Erfindung betrifft eine Brennkraftmaschine mit Abgasturboaufladung gemäss dem Oberbegriff des Patentanspruches 1.

Eine gattungsgemässe Brennkraftmaschine ist in der US-PS 37 79 213 beschrieben. Dabei wird in das Ansaugsystem und gegebenenfalls auch in das Abgassystem der Brennkraftmaschine eine Reinigungsflüssigkeit eingespritzt, die Kohlenstoffablagerungen bzw. Verkokungen verhindern soll. Mittels eines im Ansaugsystem vorgesehenen Hygrometers wird die Feuchtigkeit der Ansaugluft über ein Dosierventil eingestellt. Massnahmen zu einer Leistungsanhebung der Brennkraftmaschine sind hier nicht beschrieben.

Ferner ist es durch den Gegenstand der US-PS 26 08 051 bekanntgeworden, zur Anhebung des Ladedruckes in kritischen Betriebsphasen der Brennkraftmaschine in dem Abgasleitungssystem stromauf der Turbine des Abgasturboladers eine Brennkammer vorzusehen, in welche Verbrennungsluft und Brennstoff zugeführt und gezündet werden. Die Verbrennungsluft wird aus dem Ladeluftleitungssystem über eine Umluftleitung mit einem Steuerventil abgezweigt. Zwar ist bei einer derartigen Brennkraftmaschine ein stets ausreichend hoher Ladedruck verwirklichbar, jedoch steigt die thermische Belastung des Abgasleitungssystems und insbesondere des Abgasturboladers extrem an, insbesondere bei nach dem Otto-Prinzip betriebenen Brennkraftmaschinen.

Um Schäden durch zu hohe Temperaturen bei unter Vollast laufenden Brennkraftmaschinen zu vermeiden, wird beim Gegenstand der GB-A 21 27 486 kurzzeitig Wasser in die Brennräume der Brennkraftmaschine eingespritzt. Dabei werden sowohl die Einspritzventile für den Brennstoff als auch die Einspritzventile für das Wasser von einem einheitlichen Steuergerät angesteuert.

Schliesslich zeigt der Abstrakt der JP-A-58-110 813 eine Brennkraftmaschine mit Abgasturboaufladung, bei der in das Abgasleitungssystem stromauf der Abgasturbine Wasser eingespritzt und damit die Leistung des Turboladers erhöht wird.

Aufgabe der Erfindung ist es, eine gattungsgemässe Brennkraftmaschine mit Abgasturboaufladung vorzuschlagen, welche trotz hoher Leistungsdichte thermisch stabil und funktionssicher betreibbar und mit einem relativ geringen, zusätzlichen Bauaufwand verwirklichbar ist.

Diese Aufgabe wird mit den kennzeichnenden Merkmalen des Patentanspruches 1 gelöst. Erfindungsgemäss wird somit eine Flüssigkeits-Zuführvorrichtung vorgeschlagen, welche sowohl bei kritischen Betriebszuständen der Brennkraftmaschine wirksam wird und somit sowohl einer thermischen Überlastung als auch gegebenenfalls einer klopfenden Verbrennung entgegenwirkt. Damit verbunden ist eine höhere Leistungsausbeute, weil beispielsweise das geometrische Verdichtungsverhältnis, der Ladedruck oder andere die Leistung der Brennkraftmaschine beeinflussende Parameter entsprechend optimierbar sind und andererseits durch entsprechendes Einspritzen von Flüssigkeit, insbesondere Wasser, in das Abgasleitungssystem eine thermische Überlastung des Abgasturboladers vermeidbar ist. Die potentielle Energiedichte im Abgas wird durch die abrupte Dampfbildung beim Zuführen der Flüssigkeit wenig beeinträchtigt, die Temperatur hingegen merklich abgesenkt. Sofern die thermische Belastbarkeit des Abgasturboladers dies zulässt, kann durch diese Temperaturabsenkung eine vermehrte, zusätzliche Zufuhr von Verbrennungsluft und Brennstoff erfolgen, so dass die Förderleistung des Abgasturboladers allgemein anhebbar ist. Die beiden Ventile steuern dabei separat entweder die Flüssigkeitszufuhr zu den Brennräumen der Brennkraftmaschine oder in das Abgasleitungssystem stromauf der Abgasturbine. Die Ventile können einfache Sperrventile, z. B. elektromagnetisch betätigte Ventile, oder frequenzveränderlich gesteuerte Taktventile mit veränderlichem Durchströmquerschnitt sein.

Gemäss Anspruch 2 ist das erste Ventil zur Steuerung der Flüssigkeitszufuhr in das Abgasleitungssystem konform mit dem Steuerventil der Umluftleitung insbesondere bei hinsichtlich eines zu niedrigen Ladedruckes kritischen Betriebsphasen der Brennkraftmaschine geöffnet, um einen relativ konstanten, hohen Ladedruck sicherzustellen. Durch die Merkmale des Anspruches 3 können zusätzlich unzulässig hohe Temperaturen im Abgasleitungssystem und in der Abgasturbine ausgeschlossen werden.

Das zweite, die Flüssigkeitszufuhr zum Ladeluftleitungssystem oder unmittelbar in die Brennräume der Brennkraftmaschine einstellende Ventil kann bevorzugt entsprechend den Merkmalen des Patentanspruches 4 gesteuert sein. Dadurch lässt sich gegebenenfalls kurzfristig eine extrem hohe Leistung ohne thermische Überlastung an der Brennkraftmaschine abnehmen und ein funktionssicherer, Übertemperaturen und Klopfschäden vermeidender Dauerlastbetrieb sicherstellen.

Eine schnelle und kontinuierliche Verdampfung der zugeführten Flüssigkeit auch in grösseren Mengen in das Abgasleitungssystem wird durch die Merkmale des Patentanspruches 5 sichergestellt.

Mittels einer elektronischen Steuereinheit gemäss Patentansprüchen 6 und 7 kann schliesslich sowohl die Funktion des Steuerventiles in der Umluftleitung als auch die Steuerung der Ventile für die Flüssigkeitszufuhr logisch verknüpft werden. Dabei können insbesondere die an der Brennkraftmaschine bzw. in dem Kraftfahrzeug bereits vorhandenen Sensoren und Einrichtungen für die Brennstoffversorgung und gegebenenfalls Zündung der Brennkraftmaschine mit verwendet werden. Durch Verwendung eines Mikroprozessors und entsprechender Speichereinheiten ist eine mehrdimensionale Kennfeldsteuerung verwirklichbar.

Die Erfindung ist im folgenden an einem Ausführungsbeispiel näher erläutert. Die schematische Zeichnung zeigt eine erfindungsgemässe Brennkraftmaschine mit Abgasturboaufladung und einer Flüssigkeitszuführvorrichtung.

Eine fremdgezündete Hubkolben-Brennkraftmaschine 2 mit Zylindern I bis V ist abgasseitig über ein Abgasleitungssystem 4 und einlassseitig über ein Ladeluftleitungssystem 6 mit einem Abgasturbolader 8 verbunden. Das Abgasleitungssystem 4 setzt sich aus jeweils an die Brennkraftmaschine angeflanschten Einzelleitungen 10 zusammen, welche in eine gemeinsame Sammelleitung 12 einmünden. Die Sammelleitung 12 ist über eine weitere Abgasleitung 14 mit dem Gehäuse 16 der Abgasturbine des Abgasturboladers 8 verbunden. Von der Abgasleitung 14 zweigt eine Bypassleitung 18 ab, welche stromab des Gehäuses 16 in eine das Abgas abführende Abgasleitung 21 einmündet. Die Bypassleitung 18 wird von einem Bypassventil 20 gesteuert, welches abhängig vom Ladedruck stromauf einer in der Ladeluftleitung 6 angeordneten, willkürlich steuerbaren Drosselklappe 22 gesteuert ist.

Die Abgasturbine des Abgasturboladers 8 treibt einen Verdichter an, an dessen Gehäuse 24 einströmseitig eine Verbrennungsluftleitung 26 angeschlossen ist, in welcher ein Luftmassenmesser 28 als Teil einer Brennstoff-Zumesseinrichtung 30 und ein Luftfilter 32 angeordnet sind.

In dem Ladeluftleitungssystem 6 sind ausgehend vom Verdichtergehäuse 24 ein Ladeluftkühler 34 und die willkürlich steuerbare Drosselklappe 22 angeordnet. Die Ladeluftleitung 6 mündet in ein Saugrohr 36 mit entsprechend zu den Einlässen der Brennkraftmaschine angeordneten Einzelleitungen 38. In die Einzelleitungen 38 ragen Einspritzventile 40, welche von der Brennstoff-Zumesseinrichtung 30 angesteuert sind. Im übrigen und soweit nicht beschrieben, ist die Brennstoffzumesseinrichtung 30 bekannter Bauart.

In die Brennräume der Zylinder I bis V ragen Zündkerzen 42, die mit einem Zündsteuergerät 44 verbunden sind.

Von der Ladeluftleitung 6 zweigt stromab des Verdichters eine Umluftleitung 46 ab, in welcher ein Steuerventil 48 mit einem elektrischen Stellmotor 50 angeordnet ist. Die Umluftleitung 46 mündet in eine jede Einzelleitung 10 des Abgassystems 4, wobei an die Mündungen jeweils innerhalb der Einzelleitungen 10 Rohrabschnitte 52 angeschlossen sind, welche in Richtung der Zylinder I bis V bis nahe an deren Brennräume reichen. Das Steuerventil 48 stellt den Durchströmquerschnitt durch die Umluftleitung 46 ein, wobei der bewegliche Ventilteil 54 entsprechend verstellt wird.

Über eine Leitung 56 ist der Stellmotor 50 mit einer elektronischen Steuereinheit 70 verbunden, in welche über einen Sensor 72 der Ladedruck stromauf der Drosselklappe 22, über einen Sensor 74 der Ladedruck stromab der Drosselklappe 22, über einen Sensor 76 die Drosselklappenstellung, über einen weiteren Sensor 78 die Drehzahl der Brennkraftmaschine, über einen Sensor 80 die Abgastemperatur in der Sammelleitung 12, über die Temperatursensoren 82, 84 die Temperatur der Brennkraftmaschine 2 und des Abgasturboladers 8 sowie schliesslich über einen Klopfsensor 91 eine gegebenenfalls auftretende klopfende Verbrennung eingegeben werden. Die Steuereinheit 70 errechnet aus den eingegebenen Werten das Mass einer zusätzlichen Brennstoffanhebung und steuert entsprechend über eine Leitung 86 die Brennstoff-Zumesseinrichtung 30 an. Zugleich mit dem Anheben der Brennstoff-Zumessung wird über eine weitere Leitung 88 das Zündsteuergerät 44 angesteuert und dadurch der Zündzeitpunkt in Richtung spät verschoben. Ferner wird gleichzeitig der elektrische Stellmotor 50 im Sinne einer Öffnung der Umluftleitung 46 aktiviert.

An der Brennkraftmaschine 2 ist ferner eine Flüssigkeits-Zufuhrvorrichtung 92 vorgesehen, welche sich im wesentlichen aus einem Flüssigkeitsreservoir 94, zwei frequenzveränderlich steuerbaren Taktventilen 96, 98, einer Pumpe 100 sowie aus Einspritzdüsen 102, 104 zusammensetzt. Die genannten Teile sind durch entsprechende Leitungen miteinander verbunden.

Die Pumpe 100 fördert Flüssigkeit, insbesondere Wasser, aus dem Reservoir 94 in eine zu den Taktventilen 96, 98 führende Druckleitung 105, von welcher eine Rücklaufleitung 106 mit einem Druckhalteventil 108 in das Reservoir 94 zurückführt. Das erste Taktventil 96 ist über eine Leitung 100 mit den Einspritzdüsen 102 verbunden, welche Einspritzdüsen umfangsmässig versetzt um die Abgasleitung 14 angeordnet sind. Die Einspritzdüsen 102 liegen dabei stromauf der Abgasturbine, jedoch stromab der die zusätzliche Verbrennungsluft in das Abgasleitungssystem 4 einblasenden Rohrabschnitte 52.

Das zweite Taktventil 98 versorgt über eine Leitung 112 die Doppeleinspritzdüse 104, welche in das Ladeluftleitungssystem 6 bzw. in das Saugrohr 36 einragt. Die beiden Taktventile 96, 98 werden über Leitungen 114, 116 von der elektronischen Steuereinheit 70 angesteuert.

Bei im Leerlaufbetrieb arbeitender Brennkraftmaschine 2 ist die Drosselklappe 22 nahezu vollständig geschlossen, was durch den Lastsensor 76 angezeigt ist. Dies bewirkt durch Ansteuerung des elektrischen Stellmotores 50 eine Verstellung des beweglichen Ventilteiles 54 in Öffnungsrichtung, so dass ein Anteil der von dem Verdichter geförderten Ladeluft über die Umluftleitung 46 in die Abgas-Einzelleitungen 10 eingeblasen wird; die Verbrennungsluft strömt dabei durch die Leitungsabschnitte 52 entgegen der Strömungsrichtung der Abgase, so dass eine innige Vermischung stattfindet.

Zugleich wird über die elektronische Steuereinheit 70, welche über die Sensoren 72, 74 die Druckdifferenz in der Ladeluftleitung 6 übermittelt wird, die Brennstoff-Zumesseinrichtung 30 im Sinne einer Anhebung des Brennstoffanteiles des von dem Luftmassenmesser 28 eingestellten Brennstoff-Luftgemisches angesteuert. Durch die daraus resultierende Überfettung des den Zylindern I bis V zugeführten Brennstoff-Luftgemisches wird eine Nachverbrennung in den Abgas-Einzelleitungen 10 bewirkt. Ferner wird über die elektronische Steuereinheit 70 das Zündgerät 44 angesteuert und der Zündzeitpunkt in Richtung spät verschoben, so dass gleichzeitig die Abgastemperatur des die Brennräume verlassenden Abgases erhöht ist. Diese Massnahme fördert die für die Anhebung des Ladedruckes erforderliche Nachverbrennung im Abgasleitungssystem 4. Die somit vergrösserte Abgasmenge erhöht die Drehzahl des Abgasturboladers und damit die Förderleistung des Verdichters, so dass der Ladedruck stromauf der Drosselklappe 22 in erheblichem Masse ansteigt. Wird nunmehr durch Öffnen der Drosselklappe 22 die Brennkraftmaschine beschleunigt, so ist nahezu verzögerungsfrei ein hoher Füllungsgrad der Zylinder I bis V sichergestellt.

Mit dem Öffnen des Steuerventiles 48 in der Umluftleitung 46 wird zugleich das erste Taktventil 96 über die elektronische Steuereinheit 70 angesteuert und eine dem Durchsatz in der Umluftleitung 46 proportionale Wassermenge in die Abgasleitung 14 eingeblasen. Durch Abfragung des Temperatursensors 80 kann diese Wasserzufuhr unterbrochen werden, wenn die Abgastemperatur unterhalb eines definierten Temperaturschwellwertes liegt.

Die Steuerung oder Regelung des Steuerventiles 48 in der Umluftleitung 46 sowie des Taktventiles 96 der Flüssigkeits-Zufuhrvorrichtung 92 wird primär über den Ladedrucksensor 72 stromauf der Drosselklappe 22 sowie über die die Betriebszustände der Brennkraftmaschine 2 erfassenden Sensoren wie den Drehzahlsensor 78 und den Lastsensor 76 vorgenommen.

Desgleichen erfolgt eine Nachverbrennung im Abgasleitungssystem 4 sowie eine entsprechende, proportionale Flüssigkeitszufuhr über die Einspritzdüsen 102 bei Vollast-Beschleunigungsphasen der Brennkraftmaschine 2, in der Teillast sowie bei Schubbetrieb.

Eine Ansteuerung des zweiten Taktventiles 98 im Sinne einer Flüssigkeitszufuhr in das Saugrohr 36 erfolgt primär über den Ladedrucksensor 74 stromab der Drosselklappe 22, über den Lastsensor 76, den Klopfsensor 91 oder den Temperatursensor 84 in der Brennkraftmaschine 2, wobei deren Messwerte in der elektronischen Steuereinheit 70 gegebenenfalls nach Massgabe eines Kennfeldes verarbeitet werden. Bei einer auftretenden, klopfenden Verbrennung, bei einer Übertemperatur der Brennkraftmaschine oder bei einem definierten, hohen Ladedruck im Saugrohr 36 wird das Taktventil 98 aktiviert und von der Pumpe 100 geliefertes Wasser unter Druck über die Doppeleinspritzdüse 104 in das Saugrohr 36 eingespritzt. Über die Doppeldüse 104 wird dabei bereits eine Vernebelung des Wassers und damit eine gleichmässige Verteilung auf die einzelnen Zylinder I bis V erzielt. Anstelle der Doppeldüse 104 können jedoch auch in den Einzelleitungen 38 des Ladeluftleitungssystems 6 oder unmittelbar in den Brennräumen entsprechende Einspritzdüsen vorgesehen sein.

Sollte die Brennkraftmaschine mit zwei Abgasturboladern ausgerüstet sein, welche in ein gemeinsames Ladeluftleitungssystem fördern, so kann es ausreichen, bei getrennt geführten Abgasleitungen zu den Turbinen nur in die eine Abgasleitung zur einen Abgasturbine Umluft sowie Flüssigkeit einzubringen und nur den Brennstoffanteil der daran angeschlossenen Zylinder der Brennkraftmaschine zu erhöhen. Anstelle der Taktventile 96, 98 können auch einfache, querschnittsveränderliche Ventile vorgesehen sein, welche elektromagnetisch, mechanisch, hydraulisch oder pneumatisch betätigt sein können.

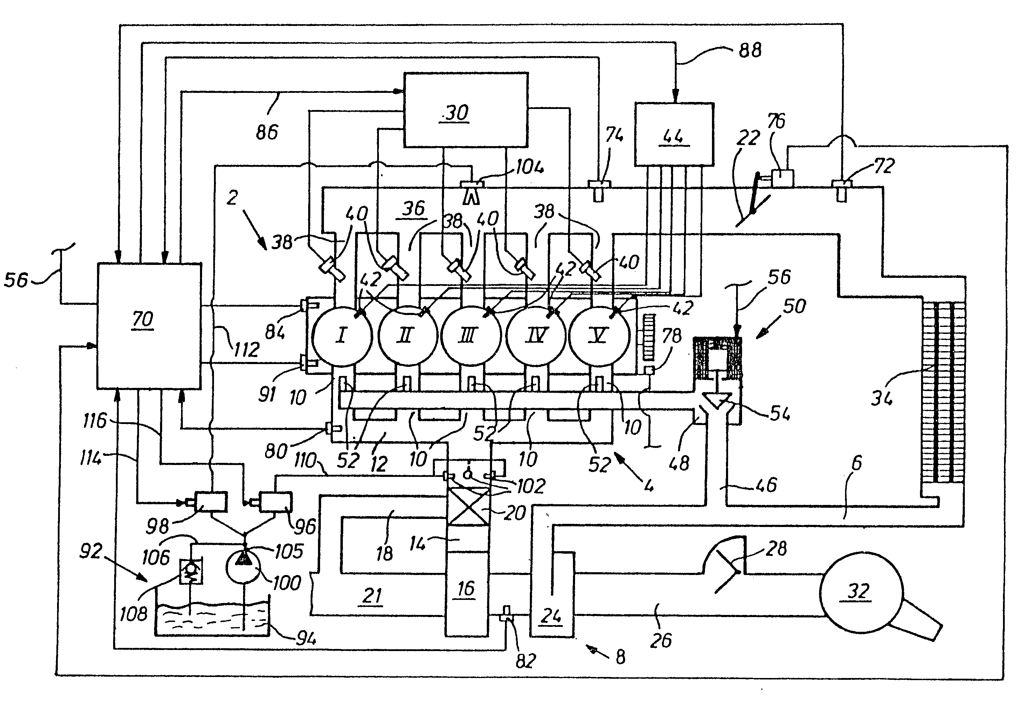

## Patentansprüche

1. Brennkraftmaschine mit Abgasturboaufladung, mit einem Abgasleitungssystem zu zumindest einem Abgasturbolader und einem Ladeluftleitungssystem, in welches zumindest ein Verdichter des Abgasturboladers Verbrennungsluft fördert, sowie mit einer Einrichtung zum zusätzlichen Zuführen von verdampfbarer Flüssigkeit, insbesondere Wasser, neben der Brennkraftmaschine zugeführtem Brennstoff, welche Einrichtung mit dem Abgasleitungssystem und dem Ladeluftleitungssystem bzw. den Brennräumen der Brennkraftmaschine verbunden ist und welche zeitweilig in das Abgasleitungssystem und/oder in das Ladeluftleitungssystem bzw. in die Brennräume Flüssigkeit einspritzt, wobei die Einrichtung zum Zuführen von Flüssigkeit mit einem Reservoir, einer Pumpe, mit Verbindungsleitungen und mit zumindest zwei Ventilen gebildet ist, wobei das erste Ventil die Flüssigkeitszufuhr zum Abgasleitungssystem und das zweite Ventil die Flüssigkeitszufuhr zum Ladeluftleitungssystem oder zu den Brennräumen steuert, dadurch gekennzeichnet, dass zur Ladedruckanhebung bei bestimmten Betriebszuständen der Brennkraftmaschine zusätzlich Luft und Brennstoff in das Abgasleitungssystem (4) eingebracht wird, dass das erste Ventil (96) abhängig von einem Steuerventil (48) in einer Umluftleitung (46) zwischen Ladeluftleitungssystem (6) und Abgasleitungssystem (11) gesteuert ist, und dass das zweite Ventil (98) abhängig vom Ladedruck im Ladeluftleitungssystem (6) gesteuert ist.

2. Brennkraftmaschine nach Anspruch 1, dadurch gekennzeichnet, dass das erste Ventil (96) sowie das Steuerventil (48) der Umluftleitung (46) im Leerlauf, bei Teillast, bei Vollast-Beschleunigungsphasen und/oder im Schubbetrieb der Brennkraftmaschine geöffnet sind.

3. Brennkraftmaschine nach den Ansprüchen 1 und 2, dadurch gekennzeichnet, dass das erste Ventil (96) zusätzlich abhängig von der Brennstoffzufuhr in das Abgasleitungssystem (4) gesteuert ist.

4. Brennkraftmaschine nach den Ansprüchen 1 bis 3, dadurch gekennzeichnet, dass das zweite Ventil (98) bei mittels eines Klopfsensors (91) festgestellter klopfender Verbrennung in der Brennkraftmaschine geöffnet ist.

5. Brennkraftmaschine nach einem oder mehreren der vorhergehenden Ansprüche, dadurch gekennzeichnet, dass die Einrichtung (92) zum Zuführen von Flüssigkeit mehrere Einspritzdüsen (102) aufweist, welche um eine stromab der zusätzlichen Luft- und Brennstoffzufuhr liegende Abgasleitung (14) umfangsmässig versetzt zueinander angeordnet sind.

6. Brennkraftmaschine nach einem oder mehreren der vorhergehenden Ansprüche, gekennzeichnet durch eine elektronische Steuereinheit (79), welche abhängig vom Ladedruck, von der Drehzahl und von der Last der Brennkraftmaschine, von einem Klopfsensor und gegebenenfalls abhängig von der Temperatur der Brennkraftmaschine und des Abgasturboladers das erste und das zweite Ventil (96, 98) sowie das Steuerventil (48) in der Umluftleitung (46) steuert.

7. Brennkraftmaschine nach Anspruch 6: dass die Steuereinheit eine Brennstoff-Zumesseinrichtung (30) und eine Zündungseinrichtung (44) der Brennkraftmaschine verstellt.

## Claims

1. Internal combustion engine with exhaust gas turbocharging, with an exhaust gas line system to at least one exhaust gas turbocharger and a charging air line system into which at least one compressor of the exhaust gas turbocharger delivers combustion air, and with a device for additionally supplying vaporisable liquid, in particular water, in addition to the fuel supplied to the internal combustion engine, which device is connected to the exhaust gas line system and the charging air line system or the combustion chambers of the internal combustion engine and injects liquid intermittently into the exhaust gas line system and/or into the charging air line system or into the combustion chambers, the device for supplying liquid being formed by a reservoir, a pump, connecting lines and at least two valves, the first valve controlling the supply of liquid to the exhaust gas line system and the second valve controlling the supply of liquid to the charging air line system or to the combustion chambers, characterised in that to increase the charging pressure under certain operating states of the internal combustion engine, air and fuel are additionally introduced into the exhaust gas line system (4), in that the first valve (96) is controlled as a function of a control valve (48) in an air circulation line (46) between the charging air line system (6) and the exhaust gas line system (11), and in that the second valve (98) is controlled as a function of the charging pressure in the charging air line system (6).

2. Internal combustion engine according to claim 1, characterised in that the first valve (96) and the control valve (48) of the air circulation line (46) are open during idling, under partial load, under full load acceleration phases and/or during thrust operation of the internal combustion engine.

3. Internal combustion engine according to claims 1 and 2, characterised in that the first valve (96) is additionally controlled as a function of the fuel supply to the exhaust gas line system (4).

4. Internal combustion engine according to claims 1 to 3, characterised in that the second valve (98) is opened in the event of combustion with knocking in the internal combustion engine detected by means of a knocking sensor (91).

5. Internal combustion engine according to one or more of the preceding claims, characterised in that the device (92) for supplying liquid has several injection jets (102) which are located at intervals around the circumference of an exhaust gas line (14) lying downstream of the additional air and fuel supply.

6. Internal combustion engine according to one or more of the preceding claims, characterised by an electronic control unit (79) which controls the first and the second valve (96, 98) and the control valve (48) in the air circulation line (46) as a function of the charging pressure, the speed and the load on the internal combustion engine and of a knocking sensor and if appropriate as a function of the temperature of the internal combustion engine and of the exhaust gas turbocharger.

7. Internal combustion engine according to claim 6: (sic) in that the control unit, a fuel proportioning device (30) and an ignition device (44) regulate the internal combustion engine.

## Revendications

1. Moteur à combustion interne à suralimentation par turbo-compresseur à gaz d'échappement, comportant un système de conduits de gaz d'échappement vers au moins un turbo-compresseur à gaz d'échappement et un système de conduits d'alimentation en air, dans lequel un compresseur au moins du turbo-compresseur à gaz d'échappement refoule de l'air de combustion, ainsi qu'un dispositif pour l'admission supplémentaire de liquide vaporisable, en particulier d'eau, en plus du carburant alimentant le moteur à combustion interne, dispositif qui est raccordé au système de conduits de gaz d'échappement et au système de conduits d'alimentation en air ou aux chambres de combustion du moteur à combustion interne et qui injecte par intermittence du liquide dans le système de conduits de gaz d'échappement et/ou dans le système de conduits d'alimentation en air ou dans les chambres de combustion, le dispositif d'admission de liquide étant réalisé avec un réservoir, une pompe, avec des conduites de jonction et avec au moins deux soupapes, la première soupape contrôlant l'admission de liquide dans le système de conduits de gaz d'échappement et la seconde soupape contrôlant l'admission de liquide dans le système de conduits d'alimentation en air ou dans les chambres de combustion, caractérisé en ce que, pour augmenter la pression d'alimentation dans des situations déterminées de fonctionnement du moteur à combustion interne, de l'air et du carburant sont chargés en plus dans le système de conduits de gaz d'échappement (4), en ce que la première soupape (96) est commandée sous la dépendance d'une soupape de commande (48) dans une conduite de dérivation d'air (46) entre le système de conduits d'alimentation en air (6) et le système de conduits de gaz d'échappement (11),

et en ce que la seconde soupape (98) est commandée sous la dépendance de la pression d'alimentation dans le système de conduits d'alimentation en air (6).

2. Moteur à combustion interne selon la revendication 1, caractérisé en ce que la première soupape (96) ainsi que la soupape de commande (48) de la conduite de dérivation d'air (44) sont ouvertes dans les conditions de ralenti, de charge partielle, dans les phases d'accélération à pleine charge et/ou de fonctionnement en poussée du moteur à combustion interne.

3. Moteur à combustion interne selon la revendication 1 ou 2, caractérisé en ce que la première soupape (96) est en plus commandée en fonction de l'admission de carburant dans le système de conduits de gaz d'échappement (4).

4. Moteur à combustion interne selon l'une quelconque des revendications 1 à 3, caractérisé en ce que la seconde soupape (98) est ouverte en cas de combustion génératrice de cognement, détectée au moyen d'un détecteur de cognement (91), dans le moteur à combustion interne.

5. Moteur à combustion interne selon l'une quelconque des revendications 1 à 4, caractérisé en ce que le dispositif (92) d'admission de liquide comporte plusieurs injecteurs (102) qui sont disposés en position décalée circonférentiellement les uns par rapport aux autres autour d'un conduit de gaz d'échappement (14) situé en aval de l'admission d'air et de carburant supplémentaires.

6. Moteur à combustion interne selon l'une quelconque des revendications 1 à 5, caractérisé par une unité de commande électronique (70) qui commande la première et la seconde soupape (96, 98), ainsi que la soupape de commande (48) dans la conduite de dérivation d'air (46) en fonction de la pression d'alimentation, de la vitesse de rotation et de la charge du moteur à combustion interne, sous la dépendance d'un détecteur de cognement et, le cas échéant, en fonction de la température du moteur à combustion interne et du turbo-compresseur à gaz d'échappement.

7. Moteur à combustion interne selon la revendication 6, caractérisé en ce que l'unité de commande (70) règle un dispositif d'admission dosée de carburant (30) et un dispositif d'allumage (44) du moteur à combustion interne.